(19) Europäisches Patentamt
European Patent Office
Office européen des brevets

(11) **EP 4 491 667 A1**

(12) **EUROPEAN PATENT APPLICATION**
published in accordance with Art. 153(4) EPC

(43) Date of publication:
**15.01.2025 Bulletin 2025/03**

(21) Application number: 23760182.8

(22) Date of filing: **27.02.2023**

(51) International Patent Classification (IPC):
**C08L 1/26** (2006.01)     **C08L 23/26** (2006.01)
**C08L 101/00** (2006.01)

(52) Cooperative Patent Classification (CPC):
**C08L 1/26; C08L 23/26; C08L 101/00**

(86) International application number:
**PCT/JP2023/007135**

(87) International publication number:
**WO 2023/163184 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 JP 2022029313**

(71) Applicants:
• **Kyoto University
Kyoto-shi, Kyoto 606-8501 (JP)**
• **Daicel Corporation
Osaka-shi, Osaka 530-0011 (JP)**

(72) Inventors:
• **SHIRAISHI, Nobuo
Kyoto-shi, Kyoto 606-8501 (JP)**
• **YOSHIOKA, Mariko
Kyoto-shi, Kyoto 606-8501 (JP)**
• **KITAYAMA, Kenji
Tokyo 108-8230 (JP)**

(74) Representative: **Grünecker Patent- und
Rechtsanwälte
PartG mbB
Leopoldstraße 4
80802 München (DE)**

(54) **THERMOFORMING COMPOSITION**

(57)     This thermoforming composition contains etherified wood powder. A ring-opened polymer of a lactone compound is grafted onto this etherified wood powder. A molded article of the present disclosure is formed using this thermoforming composition as a material. A compatibilizer for a thermoplastic resin and etherified wood powder contains etherified wood powder onto which a ring-opened polymer of a lactone compound has been grafted. This thermoforming composition is produced by (a) ring-opened graft polymerization of a lactone compound to etherified wood powder and/or (b) chemically bonding a ring-opened polymer of a lactone compound to etherified wood powder.

**EP 4 491 667 A1**

**Description**

Technical Field

The present disclosure relates to a composition for thermoforming. Specifically, the present disclosure relates to a composition for thermoforming utilizing woody biomass.

Background Art

Typically, thermoplastic resins derived from petroleum resources such as polyethylene, polypropylene, polystyrene, polyvinyl chloride, and polyethylene terephthalate have been widely used for resin compositions having excellent thermoformability. Meanwhile, in recent years, there has been a demand for development of materials derived from biomass resources in place of materials derived from petroleum resources due to increased concern about environmental problems, such as carbon neutrality and zero emission.

Examples of biomass resources derived from plants include woody biomass and herbaceous biomass. In particular, there has been a demand for utilization of woody biomass that does not compete with food and does not increase carbon dioxide in the atmosphere.

The main component of woody biomass is a natural polymer mixture called lignocellulose. Lignocellulose forms a strong higher-order structure in which cellulose, hemicellulose, and lignin are intricately intertwined. Moreover, cellulose forms a strong cellulose type I crystal structure, which inhibits plasticity. Thus, woody biomass, which contains lignocellulose as a main component, is not easily melted and dissolved due to the strong higher-order structure and crystal structure thereof. Therefore, there has been a big problem in utilizing woody biomass as a molding material as is.

JP H07-304897 A (Patent Document 1) discloses a thermoplastic chemically modified lignocellulose composition obtained by reacting a polybasic acid or an anhydride thereof with a monoepoxide compound or a polyhydric alcohol in the presence of chemically modified lignocellulose having an unsubstituted hydroxyl group.

JP H06-93001 A (Patent Document 2) discloses a benzyl-etherified molding material obtained by benzyl-etherification of a surface layer of a chip made of lignocellulose, followed by thermal fusion.

JP 3090349 B (Patent Document 3) discloses a degradable resin composition containing a mixture of (A) 3 to 97 wt.% of etherified or esterified modified lignocellulose and (B) 97 to 3 wt.% of polylactone.

JP 4325287 B (Patent Document 4) proposes a resin composition containing 100 parts by weight of polylactic acid, and 0.1 to 100 parts by weight of a graft copolymer wherein the main chain is cellulose ester or cellulose ether and a graft chain is polylactic acid.

Citation List

Patent Document

Patent Document 1: JP H07-304897 A

Patent Document 2: JP H06-93001 A

Patent Document 3: JP 3090349 B

Patent Document 4: JP 4325287 B

Summary of Invention

Technical Problem

As compared with typically used thermoplastic resins derived from petroleum resources, the thermoplasticity of the compositions disclosed in Patent Documents 1 to 4 is not fully satisfactory. Moreover, according to the findings of the inventors of the present disclosure, there is room for further improvement in the tensile properties of molded articles formed from the compositions disclosed in Patent Documents 1 to 4.

An object of the present disclosure is to provide a composition for thermoforming, the composition utilizing whole woody biomass and having excellent thermoplasticity and tensile properties.

Solution to Problem

A composition for thermoforming according to an embodiment of the present disclosure contains an etherified wood powder. The etherified wood powder is grafted with a ring-opened polymer of a lactone compound. The etherified wood powder may be a benzyl-etherified wood powder or an alkyl-etherified wood powder. The lactone compound may be ε-caprolactone.

The etherification rate of the etherified wood powder may be 40.0 wt.% or more. The etherification rate is expressed as a weight increase rate relative to the weight of a wood powder before etherification.

The composition for thermoforming may further contain a thermoplastic resin. In the composition for thermoforming, the weight ratio of the etherified wood powder to the thermoplastic resin may be 20/80 or more and 90/10 or less. The thermoplastic resin may be aliphatic polyester or polystyrene.

The composition for thermoforming may further contain a compatibilizer. The additive amount of the compatibilizer may be 3.0 parts by weight or more relative to 100 parts by weight of the total amount of the etherified wood powder and the thermoplastic resin.

A molded article according to an embodiment of the present disclosure is formed from any of the aforementioned compositions for thermoforming. From another aspect, the present disclosure provides a compatibilizer for a thermoplastic resin and an etherified wood powder, the compatibilizer containing an etherified wood powder grafted with a ring-opened polymer of a lactone compound.

A method for producing a composition for thermoforming, the composition containing an etherified wood powder grafted with a ring-opened polymer of a lactone compound, includes the following steps (i) to (iii) in this order:

(I) subjecting a wood powder to alkali treatment to produce an alkali-treated wood powder;
(ii) reacting the alkali-treated wood powder with an etherifying agent to substitute a part or all of hydroxyl groups (-OH) contained in the wood powder with ether groups, to produce an etherified wood powder; and
(iii) (a) subjecting a lactone compound to ring-opening graft polymerization on the etherified wood powder and/or (b) chemically bonding a ring-opened polymer of the lactone compound to the etherified wood powder, to produce an etherified wood powder grafted with the ring-opened polymer of the lactone compound.

This method for producing a composition for thermoforming may further include (iv) mixing a thermoplastic resin with the etherified wood powder grafted with the ring-opened polymer of the lactone compound to produce a mixture, and then melt-kneading the mixture.

Advantageous Effects of Invention

The composition for thermoforming according to an embodiment of the present disclosure has thermoplasticity comparable to that of a typical molding material derived from a petroleum resource. A molded article having excellent tensile properties is produced by using this composition for thermoforming as a material.

Description of Embodiments

Hereinafter, an example of a preferred embodiment will be specifically described. Each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or greater and Y or less". Unless otherwise noted, all test temperatures are room temperature (20°C $\pm$ 5°C).

[Composition For Thermoforming]

A composition for thermoforming according to an embodiment of the present disclosure contains an etherified wood powder. This etherified wood powder is grafted with a ring-opened polymer of a lactone compound.

[Etherified Wood Powder]

In the present disclosure, the "etherified wood powder" means a wood powder that has been subjected to etherification treatment. The "etherification treatment" means a chemical treatment for substituting a part of hydroxyl groups (-OH) contained in the wood powder with ether groups (-O-R). Herein, R represents a hydrocarbon group such as an alkyl group or a benzyl group. In other words, the "etherified wood powder" is defined as a wood powder into which a hydrocarbon group has been introduced via an ether bond. For example, a wood powder into which an alkyl group is introduced via an ether bond is referred to as "alkyl-etherified wood powder," and a wood powder into which a benzyl group is introduced via an ether bond is referred to as "benzyl-etherified wood powder." Herein, the "wood powder" means the whole wood powder obtained by shredding and/or grinding woody biomass serving as a raw material to form chips. The "whole wood powder" means that the chipped wood powder has not been separated or fractionated into components such as lignin, hemicellulose, and cellulose. Moreover, the "lactone compound" refers to an intramolecular ester which is a cyclic compound having an ester group (-COO-) in the molecule, obtained by eliminating water from a carboxyl group (-COOH) and a hydroxyl group (-OH) in the same molecule. The "thermoforming" means that a composition having thermoplasticity is heated and pressurized to be molded into any shape.

Hereinafter, preferred embodiments of the composition for thermoforming according to the present disclosure will be described.

The etherified wood powder contained in the composition for thermoforming according to an embodiment of the present disclosure is grafted with a ring-opened polymer of a lactone compound (hereinafter may be referred to as "polylactone"). The composition for thermoforming containing the etherified wood powder grafted with polylactone (hereinafter may be referred to as "polylactone-modified etherified wood powder" or "modified etherified wood powder") has good thermoplasticity. A molded article having excellent tensile properties can be produced by thermoforming this composition. Etherified wood powder grafted with aliphatic polylactone is preferred from the viewpoint that it has biodegradability and a low environmental load.

The amount of the polylactone-modified etherified wood powder contained in the composition for thermoforming is not particularly limited, and can be appropriately determined depending on the application, as long as the effects of the present disclosure are achieved. For example, the amount of the polylactone-modified etherified wood powder in the composition for thermoforming may be 30 wt.% or more, 50 wt.% or more, or 70 wt.% or more, and the upper limit thereof is 100 wt.%, from the viewpoints of easy thermoforming and improved tensile properties of the resulting molded article.

The etherified wood powder grafted with polylactone may be obtained by ring-opening graft polymerization of a lactone compound on etherified wood powder serving as a raw material, or may be obtained by chemically bonding a ring-opened polymer of the lactone compound to the etherified wood powder. Typically, the modified etherified wood powder is obtained by grafting polylactone chains to unsubstituted hydroxyl groups in the etherified wood powder. This composition may contain etherified wood powder grafted with no polylactone as long as the effects of the present disclosure are obtained.

The type of the lactone compound is not particularly limited as long as the effects of the present disclosure are obtained. Examples of the lactone compound that can be graft-polymerized with hydroxyl groups in the etherified wood powder include lactone compounds with a ring having from 3 to 10 carbons. Specific examples of the lactone compound include ε-caprolactone compounds, β-propiolactone compounds, γ-butyrolactone compounds, and δ-valerolactone compounds. One type or two or more types of lactone compounds may be used in combination.

Among the lactone compounds, ε-caprolactone compounds are preferable from the viewpoint of high polymerization reactivity. Examples of ε-caprolactone compounds include ε-caprolactone, monomethyl-ε-caprolactone, monoethyl-ε-caprolactone, monodecyl-ε-caprolactone, monopropyl-ε-caprolactone, dimethyl-ε-caprolactone, trimethyl-ε-caprolactone, ethoxy-ε-caprolactone, and cyclohexyl-ε-caprolactone.

The lactone compound is preferably ε-caprolactone from the viewpoint that it is inexpensive and readily available. The composition containing the etherified wood powder grafted with the ring-opened polymer of ε-caprolactone is easily thermoformed. The resulting molded article exhibits improved tensile properties, and further exhibits good biodegradability.

In the etherified wood powder grafted with polylactone, the polylactone content is not particularly limited, but is preferably 3 wt.% or more, more preferably 5 wt.% or more, and even more preferably 7 wt.% or more, from the viewpoint of an improvement in thermoplasticity. In order to increase the polylactone content, a large amount of polymerization catalyst is required. Thus, from the viewpoint of easy production, the polylactone content is preferably 30 wt.% or less, more preferably 25 wt.% or less, and even more preferably 20 wt.% or less. The content of the polylactone grafted onto the etherified wood powder can be determined, for example, based on the weight change before and after grafting. The polylactone content can also be determined based on the weight change of the modified etherified wood powder before and after hydrolysis treatment.

In the present disclosure, the shape of the polylactone-modified etherified wood powder is not particularly limited. For example, the polylactone-modified etherified wood powder may be in the form of powder or particulate. From the viewpoint of easy thermoforming, the size of the powdery or particulate polylactone-modified etherified wood powder may be 0.10 mm to 3.0 mm, 0.15 mm to 2.0 mm, 0.20 mm to 1.0 mm, 0.25 mm to 0.75 mm, or 0.30 mm to 0.50 mm. The size of the polylactone-modified etherified wood powder is measured by a sieve classification method using a JIS standard sieve.

The etherified wood powder serving as a raw material can be obtained, for example, by (1) shredding or grinding woody biomass to prepare wood powder, (2) treating this wood powder with an alkali, and (3) contacting and reacting the alkali-treated wood powder with an etherifying agent to substitute a part or all of hydroxyl groups (-OH) contained in the wood powder with ether groups.

The woody biomass is not particularly limited, and broad-leaved trees, coniferous trees, or the like may be used. Thinnings, lumber wastes, or timber off cuts generated in the field of forestry can be utilized. If necessary, herbaceous biomass such as rice straw and wheat bran may be used in combination.

For alkali treatment (mercerization) of the wood powder, for example, an aqueous solution of a metal hydroxide such as sodium hydroxide or potassium hydroxide is used. An alkyl halide, benzyl halide, or the like is used as the etherifying agent.

By using an alkyl halide as the etherifying agent, an alkyl ether group ($-O-C_nH_{2n+1}$: n is a natural number) is introduced into the wood powder. From the viewpoints of an improvement in etherification reaction and cost effectiveness in production, an alkyl ether group having preferably from 1 to 18 carbons, more preferably from 1 to 12 carbons is preferred. Moreover, the number of carbons (natural number n in the aforementioned formula) of the alkyl group in the alkyl ether group is preferably two or more, three or more, or four or more. Furthermore, the number of carbons (natural number n in the aforementioned formula) of the alkyl group in the alkyl ether group is also preferably 10 or less, eight or less, or six or less.

The alkyl group in the alkyl ether group may be a linear alkyl group or a branched alkyl group. Examples of the linear alkyl group include a methyl group ($CH_3-$), an ethyl group ($C_2H_5-$), a propyl group ($C_3H_7-$), a butyl group ($C_4H_9-$), a pentyl group ($C_5H_{11}-$), a hexyl group ($C_6H_{13}-$), a heptyl group ($C_7H_{15}-$), an octyl group ($C_8H_{17}-$), a nonyl group ($C_9H_{19}-$), a decyl group ($C_{10}H_{21}-$), an undecyl group ($C_{11}H_{23}-$), a dodecyl group ($C_{12}H_{25}-$), a tridecyl group ($C_{13}H_{27}-$), a tetradecyl group ($C_{14}H_{29}-$), a pentadecyl group ($C_{15}H_{31}-$), a hexadecyl group ($C_{16}H_{33}-$), a heptadecyl group ($C_{17}H_{35}-$), an octadecyl group ($C_{18}H_{37}-$), a nonadecyl group ($C_{19}H_{39}-$), and an eicosyl group ($C_{20}H_{41}-$). When the alkyl group in the alkyl halide is, for example, a butyl group ($C_4H_9-$), a butyl ether group ($-O-C_4H_9$) is introduced into the wood powder. When the alkyl group in the alkyl halide is, for example, a hexyl group ($C_6H_{13}-$), a hexyl ether group ($-O-C_6H_{13}$) is introduced into the wood powder.

Examples of the alkyl halide include alkyl chloride, alkyl iodide and alkyl bromide.

By using benzyl halide as the etherifying agent, a benzyl ether group ($-O-CH_2-C_6H_5$) is introduced into the wood powder. Examples of the benzyl halide include benzyl chloride, benzyl iodide, and benzyl bromide. From the viewpoint of improvements in thermoplasticity and tensile properties, benzyl-etherified wood powder prepared by introduction of a benzyl ether group into wood powder is preferred.

The etherification rate of the etherified wood powder is preferably 40.0 wt.% or more, more preferably 45.0 wt.% or more, and even more preferably 50.0 wt.% or more, from the viewpoint of easy thermoforming. The upper limit of the etherification rate is not particularly limited, but the etherification rate is preferably 90.0 wt.% or less from the viewpoint of introduction of polylactone by graft polymerization. In the present specification, the etherification rate is expressed as a weight increase rate (%) relative to the weight of a wood powder before etherification.

The composition for thermoforming according to an embodiment of the present disclosure may contain a thermoplastic resin together with the polylactone-modified etherified wood powder. Herein, the "thermoplastic resin" means a resin which is softened or melted by heating. The etherified wood powder grafted with polylactone has excellent affinity with a thermoplastic resin. In this embodiment, a composition in which the polylactone-modified etherified wood powder is homogeneously compatibilized with the thermoplastic resin is obtained without using a compatibilizer. A molded article produced by thermoforming of this composition has excellent tensile properties.

The composition for thermoforming according to an embodiment of the present disclosure may contain the polylactone-modified etherified wood powder and the thermoplastic resin as main components. Herein, the "main component" means a component whose content exceeds 50 wt.%. From the viewpoints of easy thermoforming and production of a molded article having excellent tensile properties, the content of the polylactone-modified etherified wood powder and the thermoplastic resin in this composition may be 80 wt.% or more or 90 wt.% or more, and the upper limit thereof is 100 wt.%.

In the composition containing the thermoplastic resin, the ratio between the thermoplastic resin and the polylactone-modified etherified wood powder is not particularly limited, and can be selected as appropriate as long as the effects of the present disclosure are obtained. For example, the weight ratio of the polylactone-modified etherified wood powder to the thermoplastic resin may be 20/80 or more, 30/70 or more, or 40/60 or more, and 90/10 or less, 80/20 or less, or 70/30 or less, from the viewpoint of an improvement in the tensile properties of the resulting molded article.

As long as the effects of the present disclosure are obtained, the type of the thermoplastic resin is not particularly limited and can be selected as appropriate depending on the application. From the viewpoints of high compatibility with the polylactone-modified etherified wood powder and easy thermoforming, aliphatic polyester or polystyrene may be used. From the viewpoints of biodegradability and low environmental load, aliphatic polyester is preferred, and poly-ε-caprolactone is more preferred.

When polystyrene is used as the thermoplastic resin, the weight average molecular weight thereof may be 50000 to 500000 or may be 55000 to 450000. Moreover, when aliphatic polyester is used as the thermoplastic resin, the weight average molecular weight thereof may be 100000 to 300000 or may be 150000 to 250000.

The composition for thermoforming of the present disclosure may contain a compatibilizer together with the polylactone-modified etherified wood powder and the thermoplastic resin. When the compatibilizer is contained, the amount of the compatibilizer is preferably 3.0 parts by weight or more with respect to 100 parts by weight of the total amount of the polylactone-modified etherified wood powder and the thermoplastic resin. According to this embodiment, by containing a predetermined amount of the compatibilizer, a composition in which the polylactone-modified etherified wood powder is more homogeneously compatibilized with the thermoplastic resin is obtained. A molded article obtained by thermoforming of this composition has further improved tensile properties. Depending on the quantitative ratio between the polylactone-modified etherified wood powder and the thermoplastic resin, when the amount of the compatibilizer is less than 3.0 parts by weight, there may be a case where an insufficiently compatibilized portion remains, and desired tensile properties cannot be achieved.

From the viewpoint of improvements in compatibility and tensile properties, the amount of the compatibilizer may be 3.5 parts by weight or more, 4.0 parts by weight or more, or 4.5 parts by weight or more with respect to 100 parts by weight of the total amount of the polylactone-modified etherified wood powder and the thermoplastic resin. From the viewpoint of breaking strength, the additive amount of the compatibilizer may be 20 parts by weight or less.

The compatibilizer may be any compound capable of compatibilizing the polylactone-modified etherified wood powder and the thermoplastic resin, and the type of the compatibilizer is not particularly limited. Examples of such a compatibilizer include styrene-maleic anhydride copolymers.

[Method for Producing Composition for Thermoforming]

The method for producing the composition for thermoforming according to an embodiment of the present disclosure is not particularly limited. The polylactone-modified etherified wood powder obtained by graft polymerization of a lactone compound with the etherified wood powder serving as a raw material may be used as is as the composition for thermoforming according to an embodiment of the present disclosure. The composition for thermoforming according to an embodiment of the present disclosure may be obtained by melt-kneading this polylactone-modified etherified wood powder and a thermoplastic resin. If necessary, the composition for thermoforming according to an embodiment of the present disclosure may be obtained by adding 3.0 parts by weight or more of a compatibilizer to 100 parts by weight of the total amount of the polylactone-modified etherified wood powder and the thermoplastic resin, and then melt-kneading the mixture. The methods for producing the etherified wood powder and the polylactone-modified etherified wood powder are as described above in the [Etherified Wood Powder] section.

For the melt-kneading, a known kneading extruder such as Labo Plastomill or a twin screw extruder can be used. From the viewpoints of the homogeneity of the kneaded product and suppression of degradation due to heating, the melt-kneading temperature may be 150°C or higher and 270°C or lower, or 170°C or higher and 230°C or lower. When the compatibilizer is added, melt-kneading may be performed after mixing the compatibilizer with the polylactone-modified etherified wood powder and the thermoplastic resin. By mixing before melt-kneading, the polylactone-modified etherified wood powder and the thermoplastic resin are more homogeneously mixed within a short period of time, resulting in a homogenized kneaded product.

The composition for thermoforming may contain a known additive such as a plasticizer, a colorant, an ultraviolet absorber, a light stabilizer, an antioxidant, a heat stabilizer, an optical property adjusting agent, a fluorescent brightener, a flame retardant, a lubricant, a hydrolysis inhibitor, or a water repellent, as long as the effects of the present invention are not inhibited.

[Molded Article]

The molded article according to an embodiment of the present disclosure is produced by thermoforming the aforementioned composition for thermoforming. The method for thermoforming the composition according to an embodiment of the present disclosure is not particularly limited. Known methods such as melt molding, injection molding, and melt film forming can be used. In addition, the shape of the molded article produced by using the composition according to an embodiment of the present disclosure as a molding material is not particularly limited, and the molded article may have any desired shape.

[Compatibilizer]

The compatibilizer according to an embodiment of the present disclosure is a compatibilizer for a thermoplastic resin and an etherified wood powder, and includes etherified wood powder grafted with a ring-opened polymer of a lactone compound. The polylactone-modified etherified wood powder has affinity for the thermoplastic resin and the etherified wood powder. By using this compatibilizer containing the polylactone-modified etherified wood powder as an active component, a homogeneous composition in which the thermoplastic resin and the etherified wood powder are compatibilized can be obtained. The etherified wood powder may be alkyl-etherified wood powder or benzyl-etherified wood powder. In order to compatibilize the thermoplastic resin and the alkyl-etherified wood powder, a compatibilizer containing polylactone-modified alkyl-etherified wood powder as an active component is preferably used. In order to compatibilize the thermoplastic resin and the benzyl-etherified wood powder, a compatibilizer containing polylactone-modified benzyl-etherified wood powder as an active component is preferably used. From the viewpoint of an improvement in compatibility, the content of the polylactone-modified etherified wood powder in this compatibilizer may be 50 wt.% or more, 60 wt.% or more, 80 wt.% or more, or 90 wt.% or more, and the upper limit thereof is 100 wt.%.

[Applications]

The composition for thermoforming according to an embodiment of the present disclosure can be suitably used as a material for, for example, tableware, packaging containers, trays, agricultural materials, fishery materials, OA parts, building materials, medical parts, home electric appliance parts, automobile members, daily goods, stationery, and eyeglass frames. In particular, in a case where aliphatic polyester is used as the thermoplastic resin, the composition can be applied to biodegradable mulch films in the agricultural field.

Examples

The effects of the present disclosure will be clarified by the examples below, but the present disclosure should not be construed as being limited based on the description of the examples. In the following description of the measurement method, "sample" is used interchangeably with "etherified wood powder," "polylactone-modified etherified wood powder," "composition for thermoforming," "thermoplastic resin," or the like as appropriate.

(Test 1: Preparation and Physical Properties of Etherified Wood Powder (EtW))

[Production Examples 1 to 6]

60 g of wood powder (sawdust of monarch birch sapwood, 20 to 80 mesh) was precisely weighed, and 180 ml of 40 wt.% aqueous sodium hydroxide solution was added thereto and stirred to homogeneously diffuse the aqueous sodium hydroxide solution in the wood powder. Thereafter, the mixture was allowed to stand at room temperature for 60 minutes for mercerization of the wood powder. Next, 324 ml of benzyl chloride (available from Fujifilm Wako Pure Chemical Corporation) was added, and benzyl-etherification was performed at 110°C using an autoclave having a volume of 1 L. After the elapse of the reaction time shown in Table 1 below, the resulting reaction product was dissolved in about 700 ml of acetone (available from Nacalai Tesque). This solution was charged into about 3.5 L of methanol (available from Nacalai Tesque) to precipitate the benzyl-etherified wood powder, and the solid content was collected by filtration using a G-2 glass filter. The solid content on the filter was washed with methanol and deionized water alternately, collected, and dried overnight in a fume hood, for a whole day in a fan drier at 60°C, and then for a whole day in a vacuum drier at room temperature, to thereby produce etherified wood powders of Production Examples 1 to 6. Each of the produced etherified wood powders was in the form of a pale yellow powder.

[Production Example 7]

60 g of wood powder (sawdust of monarch birch sapwood, 20 to 80 mesh) was precisely weighed, and 180 ml of 40 wt.% aqueous sodium hydroxide solution was added thereto and stirred to homogeneously diffuse the aqueous sodium hydroxide solution in the wood powder. Thereafter, the mixture was allowed to stand at room temperature for 60 minutes for mercerization of the wood powder. Next, instead of benzyl chloride (available from Fujifilm Wako Pure Chemical Corporation), 405 ml of hexyl chloride (available from Tokyo Chemical Industry Co., Ltd.) serving as an alkyl-etherifying agent was added, and alkyl-etherification was performed at 110°C using an autoclave having a volume of 1 L. After the elapse of a reaction time of 2.5 hours, the resulting reaction product was dissolved in about 700 ml of acetone (available from Nacalai Tesque). This solution was charged into about 3.5 L of methanol (available from Nacalai Tesque) to precipitate the alkyl-etherified wood powder, and the solid content was collected by filtration using a G-2 glass filter. The solid content on the filter was washed with methanol and deionized water alternately, collected, and dried overnight in a fume hood, for a whole day in a fan drier at 60°C, and then for a whole day in a vacuum drier at room temperature, to thereby produce etherified wood powder of Production Example 7. The produced etherified wood powder was in the form of a pale yellow powder.

[Etherification Rate (Weight Increase Rate)]

The weight W0 (g) of the wood powder before being etherified and the weight W1 (g) of the etherified wood powder after being dried were precisely weighed, and the etherification rate was determined by the following formula. The results are shown in Table 1 below as "Weight Increase Rate (%)".

$$\text{Etherification Rate (\%)} = (W1 - W0)/W0 * 100$$

Table 1

|  | Reaction Time | Weight Increase Rate |
|---|---|---|
|  | (hr) | (%) |
| Production Example 1 | 1.5 | 43.5 |
| Production Example 2 | 2.5 | 59.1 |
| Production Example 3 | 3.5 | 64.5 |
| Production Example 4 | 4.0 | 67.0 |
| Production Example 5 | 4.5 | 66.7 |
| Production Example 6 | 5.5 | 68.1 |
| Production Example 7 | 2.5 | 55.2 |

[Infrared Absorption Spectrum Measurement]

2 mg of a powdered bone-dry sample was weighed together with 200 mg of KBr, triturated in an agate mortar, and then pressurized under vacuum at a gauge pressure of 150 kgf/cm$^2$ for two to three minutes and further at 500 kgf/cm$^2$ for five minutes using an IR tableting machine to prepare a pellet. As a reference, a pellet of only KBr was also prepared in the same manner. A Fourier transform infrared spectrophotometer (trade name "FTIR-4000") available from Shimadzu Corporation was used as a measurement device to measure an infrared absorption spectrum under the following conditions.

Resolution: 2 cm$^{-1}$
Measurement range: 400 to 4000 cm$^{-1}$
Cumulative number: 25 times
Mirror speed: Slow
Gain: AUTO

As a result of comparing the infrared absorption spectra of the etherified wood powders of Production Examples 1 to 6 with that of the untreated wood powder, it was confirmed that the absorption peak of a hydroxyl group at 3368 cm$^{-1}$ as the central value in the untreated wood powder was shifted to the higher wave number side by about 100 cm$^{-1}$ in the etherified wood powder. This suggests that the number of hydrogen bond chains in the etherified wood powder is smaller than that in the untreated wood powder. In addition, in the spectra of the etherified wood powder, three absorption peaks at 1950 to 1810 cm$^{-1}$, an absorption peak at 1597 cm$^{-1}$, and two absorption peaks at 736 cm$^{-1}$ and 695 cm$^{-1}$, which indicate a monosubstituted benzene ring, were observed. Accordingly, it was confirmed that a benzyl group was introduced into the etherified wood powders of Production Examples 1 to 6.

As a result of comparing the infrared absorption spectra of the etherified wood powder of Production Example 7 with that of the untreated wood powder, it was confirmed that the absorption peak of a hydroxyl group at 3368 cm$^{-1}$ as the central value in the untreated wood powder was shifted to the higher wave number side by about 100 cm$^{-1}$ in the etherified wood powder. This suggests that the number of hydrogen bond chains in the etherified wood powder of Production Example 7 is also smaller than that in the untreated wood powder. Moreover, in the spectra of the etherified wood powder of Production Example 7, the absorption peak of a methyl group was observed at 2960 cm$^{-1}$ indicating an alkyl group, and the absorption peak of a methylene group was observed at 2920 cm$^{-1}$. Accordingly, it was confirmed that an alkyl group was introduced into the etherified wood powder of Production Example 7.

[Film Forming]

Hot press molding was performed using a 10-ton tabletop hot press (available from Toyo Seiki Seisaku-sho, Ltd.) to prepare films made of the etherified wood powders of Production Examples 1 to 6. Specifically, a polyethylene terephthalate (PET) sheet was mounted on a metal plate, and about 3 g of a sample was placed at the center of this PET sheet. Subsequently, a 0.4 mm thick aluminum plate spacer was mounted so as to surround the sample. A PET sheet and a metal plate were further placed on the sample and the spacer in this order, sandwiched between hot press plates adjusted to 200°C, slowly pressed to a gauge pressure of 50 kg/cm$^2$ to remove air, and then pressed at 150 kg/cm$^2$ for 30 seconds. Immediately after removal of the pressure, a second hot press was used for cold pressing at room temperature under the same pressure for about 1.5 minutes to form a film-like molded product.

From all the etherified wood powders of Production Examples 2 to 6, pale yellow, homogeneous and transparent films were formed by hot press molding using a hot press. In the film formed from the etherified wood powder of Production Example 1, a small amount of wood powder considered to be an unreacted substance was visually observed.

[Measurement of Thermal Fluidity]

Using a flow tester ("Shimadzu Flow Tester CFT-500" available from Shimadzu Corporation), the softening temperature Ts and flow beginning temperature Tfb of the etherified wood powder were measured by a temperature rise measurement method under the following measurement conditions.

Sample: 1.2 g
Preheating time: 120 sec
Initiation temperature: 50°C
Rate of temperature rise: 5°C/min
Load: 50 kgf
Die dimensions: 1/1 (mm/mm: diameter/length)
Plunger area: 1 cm$^2$

The plasticity curves of the etherified wood powders of Production Examples 1, 2 and 4 were determined for examination. As a result, the softening temperature Ts decreased from 135.0°C to 88.0°C, and the flow beginning temperature Tfb decreased from 219.9°C to 150.0°C in association with an increase in the etherification reaction time from 1.5 hours to 4 hours. From these results, it was confirmed that internal plasticization proceeds in association with an increase in the etherification reaction time of the wood powder.

[Differential Scanning Calorimetry (DSC)]

The etherified wood powders (EtW) of Production Examples 1 to 3, polypropylene (PP, available from Novac, melt index 30), and polystyrene (PS, available from PS Japan Corporation, melt index 7) were subjected to DSC measurement.

Firstly, a test piece having a diameter of about 4 mm was cut out from the film-like molded product having a thickness of about 0.4 mm formed by the aforementioned method, and the weight of the test piece was precisely weighed to 0.1 mg. This test piece was put in an aluminum oven sample container and brought into close contact with the bottom of the container and subjected to DSC measurement. As a reference, an empty aluminum oven sample container was used. For the measurement, a differential scanning calorimeter (trade name "DSC-220") available from Seiko Instruments Inc. was used. The glass transition temperature Tg and melting point Tm of each sample were measured by obtaining a DSC chart at the time of the first temperature rise, rapidly cooling the sample thereafter, and measuring a DSC chart at the time of the second temperature rise in accordance with the following measurement conditions.

Measurement temperature range: -100°C to 200°C (PP)
0°C to 280°C (PS)
-125°C to 140°C (BnW)
Rate of temperature rise: 10°C/min
Atmosphere: air
Sampling: 0.2 sec

From the obtained DSC chart, it was found that the glass transition temperatures Tg of the etherified wood powders of Production Examples 1 to 3 were all around -20°C to 15°C and did not depend on the etherification reaction time. The glass transition temperatures Tg of polypropylene and polystyrene measured as references were -10°C and 90°C respectively, which agree with the literature values. In addition, it was confirmed that polypropylene was a crystalline polymer having an endothermic peak accompanied by crystal melting around 160°C, and the etherified wood powder and polystyrene were amorphous polymers having no clear melting points.

[Thermomechanical Analysis (TMA)]

Using a thermomechanical tester (trade name "TMA/SS-120" available from Seiko Instruments Inc.), the tensile deformation behaviors of the etherified wood powders (EtW) of Production Examples 1, 2, and 4, polypropylene (PP, available from Novac, melt index 30), and polystyrene (PS, available from PS Japan Corporation, melt index 7) at increased temperatures were measured.

Firstly, the film-like molded product having a thickness of about 0.4 mm formed by the aforementioned method was cut out into a piece having a width of about 2 mm and a length of 18 mm with a cutter knife, and the cut piece was used as a measurement sample. This measurement sample was measured with a caliper to calculate the cross-sectional area, and then the tensile behavior in the course of temperature rise was measured under the following conditions to determine the 10% deformation temperature of the sample, which was taken as the thermal flow beginning temperature (°C). The results for each load are shown in Table 2 below.

Measurement type: Tensile test (temperature rise under predetermined conditions at a constant load)
Sample dimensions: cross-sectional area of about 1 mm$^2$, span length of 10.00 mm
Measurement dimension range: 0 to 1000 $\mu$m (elongation)
Measurement temperature range: 15°C to 200°C (PP)
13°C to 165°C (PS)
13°C to 270°C (BnW)
Rate of temperature rise: 2°C/min
Load: constant load of 1, 5, 25, 50, or 100 g
Atmosphere: air
Sampling: 0.5 sec

[Table 2]

| Load | Production Example 1 | Production Example 2 | Production Example 4 | PP | PS |
|------|----------------------|----------------------|----------------------|------|------|
| (g) | (°C) | (°C) | (°C) | (°C) | (°C) |
| 1 | 204.3 | 180.8 | 177.3 | 158.4 | 129.6 |
| 5 | 168.5 | 147.5 | 141.7 | 155.4 | 109.6 |
| 25 | 139.2 | 104.6 | 97.2 | - | 99 |
| 50 | 124.4 | 97.9 | 93 | - | - |
| 100 | 118.2 | 92.3 | 88.8 | - | - |

As shown in Table 2, for the etherified wood powders and polystyrene, the thermal flow beginning temperature decreased in association with an increase in load. In contrast, for polypropylene, the load dependency of the thermal flow beginning temperature was not observed. Moreover, the deformation amount of the test piece around the thermal flow point was rapidly increased in the case of polypropylene, but was relatively moderately increased in the case of the etherified wood powders and polystyrene. From these results, it can be seen that the etherified wood powders are amorphous like polystyrene, and polypropylene is crystalline.

[Tensile test]

A strip-shaped test piece having a length of 80 mm and a width of 5 mm was cut out with a cutter knife from the film-like molded product having a thickness of about 0.4 mm formed by the aforementioned method, and the cut surface was polished. The width and thickness of each test piece were measured at two points with a caliper, and the average value was used to calculate the cross-sectional area. Thereafter, each test piece was subjected to a tensile test using a tensile tester (trade name "Autograph DCS-R-500" available from by Shimadzu Corporation). A load-deformation curve was measured. The tensile strength (kgf/cm$^2$), the Young's modulus (kgf/cm$^2$), and the elongation at break (%) were calculated. The measurement conditions are as follows. The results obtained for the etherified wood powders of Production Examples 1 to 3, 5 and 7 and polypropylene are shown in Table 3 below.

Span length: 40 mm
Cross head speed: 0.5 mm/min or 5 mm/min

[Table 3]

|  | Reaction Time | Tensile strength | Young's modulus/10[4] | Elongation at Break |
|---|---|---|---|---|
|  | (hr) | (kgf/cm$^2$) | (kgf/cm$^2$) | (%) |
| Production Example 1 | 1.5 | 432 | 1.35 | 6.3 |
| Production Example 2 | 2.5 | 430 | 1.32 | 10.1 |
| Production Example 3 | 3.5 | 427 | 1.29 | 13.4 |
| Production Example 5 | 4.5 | 403 | 1.27 | 8.3 |
| Production Example 7 | 2.5 | 390 | 1.21 | 17.3 |
| PP | - | 271 | 0.98 | >300 |

As shown in Table 3, the tensile strength of the etherified wood powder decreased in association with an increase in etherification reaction time. The tensile strengths in Production Examples 2 and 7 are comparable to polypropylene and have sufficient thermoplasticity, but it can be seen from the Young's modulus and elongation at break that they are rather hard and brittle.

(Test 2: Blending with Thermoplastic Resin and Tensile Properties)

[Experimental Examples 1 to 5]

The etherified wood powder (EtW) of Production Example 2 and polycaprolactone (PCL, available from Daicel Corporation, weight average molecular weight 70000, melting point 60°C) were charged into Labo Plastomill (available from Toyo Seiki Seisaku-sho, Ltd.) in accordance with the formulation shown in Experimental Examples 1 to 5 of Table 4 below. The total amount of the charged etherified wood powder and polycaprolactone was 24 g. The total amount of the etherified wood powder and polycaprolactone was charged over about 5 minutes into Labo Plastomill preheated to 190°C, and then kneaded for 10 minutes at 190°C and 30 rpm to prepare compositions of Experimental Examples 1 to 5.

In the same manner as in the aforementioned tensile test, the tensile strength (kgf/cm$^2$), the Young's modulus (kgf/cm$^2$), and the elongation at break (%) of the compositions of Experimental Examples 1 to 5 and polycaprolactone (PCL) before kneading were measured. The results are shown in Table 4 below together with the tensile properties of Production Example 2.

[Table 4]

|  | EtW/PCL | Tensile strength | Young's modulus/10[4] | Elongation at Break |
|---|---|---|---|---|
|  | (Weight Ratio) | (kgf/cm$^2$) | (kgf/cm$^2$) | (%) |
| Production Example 2 | 10/0 | 430 | 1.32 | 10.1 |
| Experimental Example 1 | 8/2 | 225 | 0.76 | 104.0 |
| Experimental Example 2 | 7/3 | 123 | 0.58 | 156.0 |
| Experimental Example 3 | 6/4 | 118 | 0.26 | 103.0 |
| Experimental Example 4 | 4/6 | 126 | 0.53 | 84.3 |
| Experimental Example 5 | 2/8 | 173 | 0.57 | 87.7 |
| PCL | 0/10 | 190 | 0.83 | 432.0 |

As shown in Table 4, in the compositions of Experimental Examples 1 to 5 in which the etherified wood powder and polycaprolactone were blended, the elongation at break was remarkably improved as compared with the etherified wood powder, but the tensile strength thereof tended to be lower as compared with both the etherified wood powder and polycaprolactone. The affinity or compatibility between the etherified wood powder and polycaprolactone was considered to be low for achieving the desired tensile properties.

[Experimental Examples 6 to 9]

The etherified wood powder (EtW) of Production Example 2, polycaprolactone (PCL, available from Daicel Corporation, weight average molecular weight 70000, melting point 60°C), and a styrene-maleic anhydride copolymer (SMA, available from Arakawa Chemical Industries, Ltd.) as a compatibilizer were charged into Labo Plastomill (available from Toyo Seiki Seisaku-sho, Ltd.) and kneaded under the same conditions as in Experimental Examples 1 to 5 to prepare compositions of Experimental Examples 6 to 9. The total amount of the charged etherified wood powder, polycaprolactone, and styrene-maleic anhydride copolymer was 24 g. The additive amount (parts by weight) of the compatibilizer relative to 100 parts by weight of the total amount of the etherified wood powder and polycaprolactone is shown in Table 5 below.

The tensile strength (kgf/cm$^2$), the Young's modulus (kgf/cm$^2$), and the elongation at break (%) of the compositions of the Experimental Examples 6 to 9 were measured in the same manner as in the aforementioned tensile test. The results are shown in Table 5 below together with the tensile properties in Experimental Example 2.

[Table 5]

|  | Compatibilizer | Tensile strength | Young's modulus/$10^4$ | Elongation at Break |
|---|---|---|---|---|
|  | (parts by weight) | (kgf/cm$^2$) | (kgf/cm$^2$) | (%) |
| Experimental Example 2 | 0 | 123 | 0.58 | 156.0 |
| Experimental Example 6 | 1 | 112 | 0.45 | 127.0 |
| Experimental Example 7 | 3 | 128 | 0.61 | 118.0 |
| Experimental Example 8 | 5 | 138 | 1.10 | 123.0 |
| Experimental Example 9 | 10 | 149 | 1.29 | 116.0 |

As shown in Table 5, it was confirmed that the tensile strength and the Young's modulus were improved by addition of a predetermined amount of the compatibilizer.

[Experimental Examples 10 to 15]

In Experimental Examples 10 to 15, etherified wood powder grafted with polycaprolactone (g-EtW) was used instead of the etherified wood powder.

[Ring-Opening Graft Polymerization of ε-Caprolactone onto Etherified Wood Powder]

[Experimental Example 10]

3 g of the etherified wood powder of Production Example 2 and 24 g of ε-caprolactone (available from Daicel Corporation) were charged into a four-necked flask having a volume of 200 ml, and then this flask was immersed in an oil bath set at 120°C. The stirring was performed with 200 rpm for one hour. Next, a toluene solution of diphenylphosphoric acid serving as a catalyst was added to the flask, and graft polymerization reaction was carried out at 120°C for one hour. The catalyst was added in an amount of 2.0 wt.% of the entire reaction system.

After completion of the reaction, the total amount of the contents in the flask was added dropwise to a large excess of a methanol/toluene mixed solvent (volume ratio: 8/2) to perform purification by a reprecipitation method. After removal of the supernatant by decantation, purification was performed with methanol, and the resulting precipitate (graft polymer) was collected by filtration using a PTFE membrane filter having a pore size of 0.2 μm. The collected precipitate was fan-dried at 60°C for 12 hours and then vacuum-dried at 60°C for 12 hours to produce polycaprolactone-grafted etherified wood powder of Experimental Example 10.

The weight M0 (g) of the etherified wood powder before grafting and the weight M1 (g) of the polycaprolactone-grafted etherified wood powder after drying were precisely weighed, and the weight increase rate was determined by the following formula. As a result, the weight increase rate was 52.0% in Experimental Example 10. Weight increase rate (%) = (M1 - M0)/M0*100

[Experimental Example 13]

The polycaprolactone-grafted etherified wood powder of Experimental Example 13 was produced in the same manner as in Experimental Example 10, except that the etherified wood powder of Production Example 7 was used instead of the etherified wood powder of Production Example 2. The weight increase rate was determined in the same manner as in Experimental Example 10. As a result, the weight increase rate was 56.8% in Experimental Example 13.

[Blending of Grafted Etherified Wood Powder and Polycaprolactone]

In accordance with the formulation shown in Table 6 below, the grafted etherified wood powder (g-EtW) of Experimental Example 10 and polycaprolactone (PCL, available from Daicel Corporation, weight average molecular weight: 70000, melting point: 60°C) were charged into Labo Plastomill (available from Toyo Seiki Seisaku-sho, Ltd.) and kneaded under the same conditions as in Experimental Examples 1 to 5 to produce compositions of Experimental Examples 11 and 12. The tensile strength (kgf/cm$^2$), Young's modulus (kgf/cm$^2$), and elongation at break (%) of the compositions of Experimental Examples 10 to 12 were measured in the same manner as in the aforementioned tensile test. By using each of the compositions of Experimental Examples 10 to 12, a transparent, homogeneous, and film-like test piece was formed under the aforementioned film forming conditions. The results obtained using the test piece are shown in Table 6 below together with the tensile properties of the etherified wood powder of Production Example 2 and polycaprolactone (PCL).

[Table 6]

|  | g-EtW/PCL | Tensile strength | Young's modulus/10$^4$ | Elongation at Break |
| --- | --- | --- | --- | --- |
|  | (Weight Ratio) | (kgf/cm$^2$) | (kgf/cm$^2$) | (%) |
| Production Example 2 | - | 430 | 1.32 | 10.1 |
| Experimental Example 10 | 10/0 | 260 | 1.20 | 284.0 |
| Experimental Example 11 | 7/3 | 232 | 1.04 | 356.0 |
| Experimental Example 12 | 3/7 | 216 | 0.95 | 380.0 |
| PCL | 0/10 | 190 | 0.83 | 432.0 |

As shown in Table 6, in the polycaprolactone-grafted etherified wood powder (Experimental Example 10), it was confirmed that the elongation at break was remarkably improved as compared with the etherified wood powder before grafting (Production Example 2), and the tensile strength and the Young's modulus were improved as compared with polycaprolactone (PCL). Moreover, in Experimental Examples 11 and 12 in which the polycaprolactone-grafted etherified wood powder and the thermoplastic resin (polycaprolactone) were blended, it was confirmed that tensile properties were improved without using a compatibilizer.

In accordance with the formulation shown in Table 7 below, the grafted etherified wood powder (g-EtW) of Experimental Example 13 and polycaprolactone (PCL, available from Daicel Corporation, weight average molecular weight: 70000, melting point: 60°C) were charged into Labo Plastomill (available from Toyo Seiki Seisaku-sho, Ltd.) and kneaded under the same conditions as in Experimental Examples 1 to 5 to produce compositions of Experimental Examples 14 and 15. The tensile strength (kgf/cm$^2$), Young's modulus (kgf/cm$^2$), and elongation at break (%) of the compositions of Experimental Examples 13 to 15 were measured in the same manner as in the aforementioned tensile test. By using each of the compositions of Experimental Examples 13 to 15, a transparent, homogeneous, and film-like test piece was formed under the aforementioned film forming conditions. The results obtained using this test piece are shown in Table 7 below together with the tensile properties of the etherified wood powder of Production Example 7 and polycaprolactone (PCL).

[Table 7]

|  | g-EtW/PCL | Tensile strength | Young's modulus/10$^4$ | Elongation at Break |
| --- | --- | --- | --- | --- |
|  | (Weight Ratio) | (kgf/cm$^2$) | (kgf/cm$^2$) | (%) |
| Production Example 7 | - | 390 | 1.21 | 17.3 |
| Experimental Example 13 | 10/0 | 252 | 1.02 | 301.0 |
| Experimental Example 14 | 7/3 | 224 | 0.96 | 368.0 |

(continued)

| | g-EtW/PCL | Tensile strength | Young's modulus/$10^4$ | Elongation at Break |
|---|---|---|---|---|
| | (Weight Ratio) | (kgf/cm$^2$) | (kgf/cm$^2$) | (%) |
| Experimental Example 15 | 3/7 | 207 | 0.88 | 396.0 |
| PCL | 0/10 | 190 | 0.83 | 432.0 |

As shown in Table 7, in the polycaprolactone-grafted etherified wood powder (Experimental Example 13), it was confirmed that the elongation at break was remarkably improved as compared with the etherified wood powder before grafting (Production Example 7), and the tensile strength and the Young's modulus were improved as compared with polycaprolactone (PCL). Moreover, in Experimental Examples 14 and 15 in which the polycaprolactone-grafted etherified wood powder and the thermoplastic resin (polycaprolactone) were blended, it was confirmed that tensile properties were improved without using a compatibilizer.

As described above, a transparent and homogeneous film can be formed by thermoforming from the composition according to an embodiment of the present disclosure. Furthermore, the resulting molded article has improved tensile properties. From these evaluation results, the superiority of the present disclosure is clear.

To summarize the above, the configurations of the embodiments and variations thereof will be described below.

[1] A composition for thermoforming, the composition containing an etherified wood powder, wherein the etherified wood powder is grafted with a ring-opened polymer of a lactone compound.

[2] The composition for thermoforming according to [1], wherein the etherified wood powder is a benzyl-etherified wood powder.

[3] The composition for thermoforming according to [1], wherein the etherified wood powder is an alkyl-etherified wood powder.

[4] The composition for thermoforming according to any one of [1] to [3], wherein the lactone compound is ε-caprolactone.

[5] The composition for thermoforming according to any one of [1] to [4], wherein an etherification rate of the etherified wood powder is 40.0 wt.% or more, and the etherification rate is expressed as a weight increase rate relative to a weight of a wood powder before etherification.

[6] The composition for thermoforming according to any one of [1] to [5], further containing a thermoplastic resin.

[7] The composition for thermoforming according to [6], wherein a weight ratio of the etherified wood powder to the thermoplastic resin is 20/80 or more and 90/10 or less.

[8] The composition for thermoforming according to [6] or [7], wherein the thermoplastic resin is aliphatic polyester or polystyrene.

[9] The composition for thermoforming according to any one of [1] to [8], further containing a compatibilizer.

[10] The composition for thermoforming according to [9], wherein an additive amount of the compatibilizer is 3.0 parts by weight or more relative to 100 parts by weight of a total amount of the etherified wood powder and the thermoplastic resin.

[11] A molded article formed from the composition for thermoforming described in any one of [1] to [10].

[12] A compatibilizer for a thermoplastic resin and an etherified wood powder, the compatibilizer containing an etherified wood powder grafted with a ring-opened polymer of a lactone compound.

[13] A method for producing a composition for thermoforming, the composition containing an etherified wood powder, wherein the etherified wood powder is grafted with a ring-opened polymer of a lactone compound, the method including:

(i) subjecting a wood powder to alkali treatment to produce an alkali-treated wood powder;
(ii) reacting the alkali-treated wood powder with an etherifying agent to substitute a part or all of hydroxyl groups (-OH) contained in the wood powder with ether groups to produce an etherified wood powder; and
(iii) (a) subjecting a lactone compound to ring-opening graft polymerization on the etherified wood powder, and/or (b) chemically bonding a ring-opened polymer of a lactone compound to the etherified wood powder, to produce an etherified wood powder grafted with the ring-opened polymer of the lactone compound.

[14] The method for producing a composition for thermoforming according to [13], further including (iv) mixing a thermoplastic resin with the etherified wood powder grafted with the ring-opened polymer of the lactone compound to produce a mixture, and then melt-kneading the mixture.

[15] A method for producing a thermoformed product, the method including (v) thermoforming the composition after step (iii) of the method described in [13] above, or after step (iv) of the method described in [14] above.

[16] A wood powder containing an etherified wood powder, wherein the etherified wood powder is grafted with a ring-opened polymer of a lactone compound.

[17] An etherified wood powder grafted with a ring-opened polymer of a lactone compound.

[18] Use of a wood powder for thermoforming, wherein the wood powder contains an etherified wood powder, and the etherified wood powder is grafted with a ring-opened polymer of a lactone compound.

[19] A method of using a wood powder for thermoforming, wherein the wood powder contains an etherified wood powder, and the etherified wood powder is grafted with a ring-opened polymer of a lactone compound.

[20] A molded product produced by thermoforming a composition containing an etherified wood powder, wherein the etherified wood powder is grafted with a ring-opened polymer of a lactone compound.

Industrial Applicability

The composition for thermoforming described above can be applied to the production of various molded articles using injection molding, melt molding, or inflation molding.

**Claims**

1. A composition for thermoforming, the composition comprising an etherified wood powder, wherein the etherified wood powder is grafted with a ring-opened polymer of a lactone compound.

2. The composition for thermoforming according to claim 1, wherein the etherified wood powder is a benzyl-etherified wood powder.

3. The composition for thermoforming according to claim 1, wherein the etherified wood powder is an alkyl-etherified wood powder.

4. The composition for thermoforming according to any one of claims 1 to 3, wherein the lactone compound is ε-caprolactone.

5. The composition for thermoforming according to any one of claims 1 to 4, wherein an etherification rate of the etherified wood powder is 40.0 wt.% or more, and the etherification rate is expressed as a weight increase rate relative to a weight of a wood powder before etherification.

6. The composition for thermoforming according to any one of claims 1 to 5, further comprising a thermoplastic resin.

7. The composition for thermoforming according to claim 6, wherein a weight ratio of the etherified wood powder to the thermoplastic resin is 20/80 or more and 90/10 or less.

8. The composition for thermoforming according to claim 6 or 7, wherein the thermoplastic resin is aliphatic polyester or polystyrene.

9. The composition for thermoforming according to any one of claims 1 to 8, further comprising a compatibilizer.

10. The composition for thermoforming according to claim 9, wherein an additive amount of the compatibilizer is 3.0 parts by weight or more relative to 100 parts by weight of a total amount of the etherified wood powder and the thermoplastic resin.

11. A molded article formed from the composition for thermoforming described in any one of claims 1 to 10.

12. A compatibilizer for a thermoplastic resin and an etherified wood powder, the compatibilizer comprising an etherified wood powder grafted with a ring-opened polymer of a lactone compound.

13. A method for producing a composition for thermoforming, the composition containing an etherified wood powder, the etherified wood powder being grafted with a ring-opened polymer of a lactone compound, the method comprising:

(i) subjecting a wood powder to alkali treatment to produce an alkali-treated wood powder;
(ii) reacting the alkali-treated wood powder with an etherifying agent to substitute a part or all of hydroxyl groups (-OH) contained in the wood powder with ether groups to produce an etherified wood powder; and
(iii) (a) subjecting a lactone compound to ring-opening graft polymerization on the etherified wood powder, and/or
(b) chemically bonding a ring-opened polymer of a lactone compound to the etherified wood powder, to produce an etherified wood powder grafted with the ring-opened polymer of the lactone compound.

14. The method for producing a composition for thermoforming according to claim 13, further comprising (iv) mixing a thermoplastic resin with the etherified wood powder grafted with the ring-opened polymer of the lactone compound to produce a mixture, and then melt-kneading the mixture.

## INTERNATIONAL SEARCH REPORT

| International application No. |
| --- |
| **PCT/JP2023/007135** |

**A.    CLASSIFICATION OF SUBJECT MATTER**

*C08L 1/26*(2006.01)i; *C08L 23/26*(2006.01)i; *C08L 101/00*(2006.01)i
FI:    C08L1/26; C08L101/00; C08L23/26

According to International Patent Classification (IPC) or to both national classification and IPC

**B.    FIELDS SEARCHED**

Minimum documentation searched (classification system followed by classification symbols)

C08L1/26; C08L23/26; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus (JDreamIII)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 5-39412 A (CALP CORP.) 19 February 1993 (1993-02-19) | 1-14 |
| A | WO 2006/001076 A1 (AGRI FUTURE JOETSU CO., LTD.) 05 January 2006 (2006-01-05) | 1-14 |
| A | JP 60-79070 A (DAICEL KAGAKU KOGYO KK) 04 May 1985 (1985-05-04) | 1-14 |
| A | JP 2004-143438 A (DAICEL KAGAKU KOGYO KK) 20 May 2004 (2004-05-20) | 1-14 |
| A | JP 3-268902 A (SANYO KOKUSAKU PULP CO., LTD.) 29 November 1991 (1991-11-29) | 1-14 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **25 April 2023** | **16 May 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

## INTERNATIONAL SEARCH REPORT
### Information on patent family members

International application No.

**PCT/JP2023/007135**

| Patent document cited in search report | | | Publication date (day/month/year) | Patent family member(s) | | | Publication date (day/month/year) |
|---|---|---|---|---|---|---|---|
| JP | 5-39412 | A | 19 February 1993 | (Family: none) | | | |
| WO | 2006/001076 | A1 | 05 January 2006 | US | 2008/0306235 | A1 | |
| | | | | EP | 1762583 | A1 | |
| | | | | CN | 1972980 | A | |
| JP | 60-79070 | A | 04 May 1985 | (Family: none) | | | |
| JP | 2004-143438 | A | 20 May 2004 | (Family: none) | | | |
| JP | 3-268902 | A | 29 November 1991 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07304897 A
- JP H0693001 A
- JP 3090349 B
- JP 4325287 B